# EUROPEAN PATENT SPECIFICATION

(11) **EP 2 589 512 B1**
(45) Date of publication and mention of the grant of the patent: **11.02.2015**
(21) Application number: 11187892.2
(22) Date of filing: 04.11.2011
(51) Int. Cl.: B60Q 1/30

(54) **Light support bar for a vehicle trailer**
Lichtträgerstange für einen Fahrzeuganhänger
Barre d'éclairage pour remorque de véhicule

(43) Date of publication of application: 08.05.2013
(73) Proprietor: Brenderup AB, 553 02 Jönköping (SE)
(72) Inventor: Storck, Joakim, S-553 31 Jönköping (SE)
(74) Representative: Valea AB

(56) References cited:
- US-A- 3 691 366
- US-A- 4 286 309
- US-A1- 2011 090 072

## Description

### TECHNICAL FIELD

The present invention relates to a detachable light support bar for a vehicle trailer. The detachable light support bar is easy to detach from to the vehicle trailer, while at the same time being easy to mount to the vehicle trailer. The present invention also relates to a method for removing the detachable light support bar from the vehicle trailer.

### BACKGROUND

Vehicle trailers are commonly used to transport vehicles, such as floating vessels, e.g. leisure crafts, jet skis, and cars, motorcycles etc. between different destinations. Due to legislations concerning traffic safety, vehicle trailers are susceptible to the requirements of having traffic lights as the vehicle trailer generally obstruct the line of sight of the vehicles own traffic lights. The registration plate also needs to be clearly visible on the vehicle trailer. In some countries, the legislation requires that the vehicle trailers have a frame structure which is configured to prevent rearwardly positioned vehicles from penetrating the vehicle trailer frame if colliding into the rear of the vehicle trailer.

Vehicle trailers, and specifically boat trailers, may require that the entire rear of the vehicle trailers is removed to enable the boat to slide off the vehicle trailer when launching the boat into the water. A solution to that problem is presented in the US patent No. 4,422,664, assigned to Sebert E. Reese. The boat trailer comprises pivotable bars comprising lamps. The bars are simply pivoted about a bolt to be displaced from the rear of the vehicle trailer.

A removable light bar according to the preamble of claim 1 is disclosed in the US patent No. 3,691,366 in the name of Spreuer. The trailer in Spreuer is however not a boat trailer and as such not suffering from the same demands imparted by the legislations on boat trailers, or from the need to submerge the rear of the vehicle trailer in water.

### SUMMARY

The prior art solutions are not very user friendly as they require a user to unlock the detachable light bar, sometimes referred to as a light panel or a light board, at at least two positions. This generally requires a user to walk around the vehicle trailer before the light bar can be fully removed from the vehicle trailer. It is an object of the present invention to provide for a detachable light support bar, which can be removed from a vehicle trailer in an easy and user friendly manner. This object is at least partly met by a detachable light support bar for a vehicle trailer. The detachable light support bar has a first and a second end and a longitudinal extension there between. The detachable light support bar comprises at least one lock mechanism to releaseably lock the detachable light support bar to the vehicle trailer. The lock mechanism is arranged in working cooperation with at least one release mechanism adapted to unlock the at least one lock mechanism upon activation at an activation point by a user. The detachable light support bar can thereafter be removed from the vehicle trailer.

The activation point is positioned on the detachable light support bar and is displaced at a distance from the at least one lock mechanism measured along the longitudinal extension of the detachable light support bar, enabling a user to actuate the release mechanism with a first grip, and to remove the detachable light support bar from the vehicle trailer with the first grip.

Optionally, the first and the second ends of the detachable light support bar are separated by a first distance, and the activation point is arranged at a second distance from the first end of the detachable light support bar, the second distance being about 10-50 % of the first distance.

A detachable light support bar can be provided with electronics and lamps, to form a detachable light carrying support bar.

The present invention provides for a user friendly detachable light support bar which easily can be released form the vehicle trailer and thereafter lifted and carried away, i.e. removed from the vehicle trailer substantially with one motion. A user is thus not required to walk around the vehicle trailer to unlock multiple lock mechanisms.

According to an aspect, the detachable light support bar can be removed without changing the first grip from the activation point. The user thus simply actuates the release mechanism, and can use one or two hands to remove the detachable light support bar without removing the hand used to actuate the release mechanism at the activation point.

According to an aspect, the activation point is located at a distance from the at least one lock mechanism of the detachable light support bar. This can enable a lock mechanism to be positioned in the proximity of one end of the detachable light support bar for example, while the activation point to the release mechanism is located at a distance therefrom enabling a user to activate the release mechanism and remove the detachable light support bar in one go. It permits a user to lift and carry the detachable light support bar in a controlled manner with respect to the point of balance of the detachable light support bar.

According to an aspect, the first and the second ends of the light support bar are separated by a first distance, and the activation point is arranged at a second distance from the first end of the detachable light support bar, wherein the second distance is about 10-50 % of the first distance, optionally 15-50 % of the first distance, optionally 15-40 % of the first distance. Optionally it is located between the first end and at a centre point, the centre point being position in the middle between the first and the second end of the detachable light support bar.

According to an aspect, the detachable light support bar comprises a point of balance arranged between the first and the second ends of the detachable light support bar. The activation point is arranged between the point of balance and the at least one lock mechanism, or between the point of balance and the first end of the detachable light support bar. This enables a user to use a first hand to grasp the detachable light support bar and actuate the release mechanism, while at the same time use a second hand to grasp the detachable light support bar at a second position, with respect to the first hand. The detachable light support bar can thus be lifted and removed using both hands with the point of balance at a favourable position.

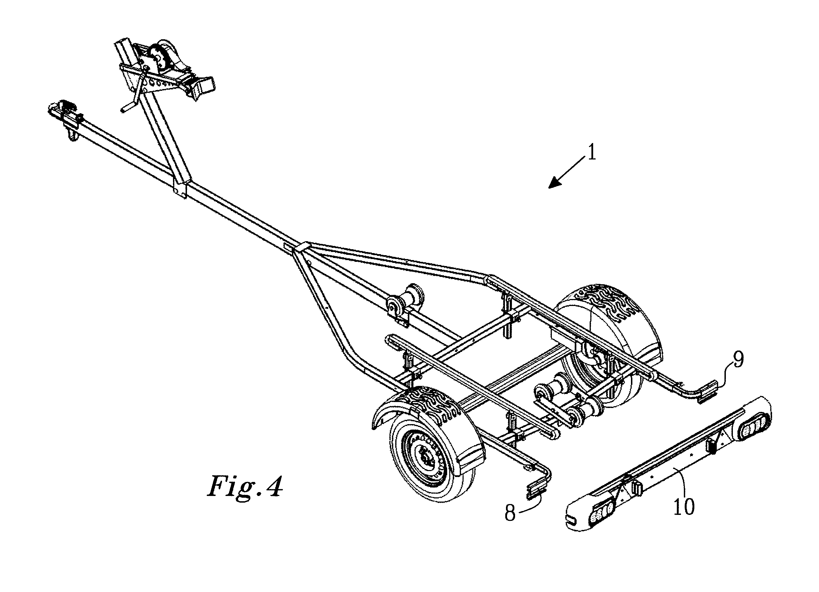

According to an aspect, the detachable light support bar comprises a plurality of lock mechanisms, in an embodiment, a first and a second lock mechanism, adapted to cooperate with at least a first and a second connection site on the vehicle trailer. The release mechanism is arranged in working cooperation with the first and the second lock mechanisms, so that upon activation of the release mechanism, the first and the second lock mechanisms are unlocked. The lock mechanism can be unlocked in a step wise manner, i.e. the first lock mechanism is unlocked before the second lock mechanism, or both lock mechanism are unlocked substantially simultaneously, or simultaneously. According to an aspect, the activation point is arranged between the first and the second lock mechanisms, with respect to the longitudinal extension of the detachable light support bar. This embodiment is useful when the vehicle trailer has two separated connection sites for the detachable light support bar, especially when the connection sites are positioned at the sides of the vehicle trailer, as shown in figure 4 for example.

According to an aspect, the first and second lock mechanisms are separated by a third distance measured along the longitudinal extension of the detachable light support bar, and the activation point is arranged such that the distance from the first lock mechanism measured along the longitudinal extension of the detachable light support bar can be about 10-50 % of the third distance, optionally 15-50 % of the third distance, optionally 15-40 % of the third distance.

According to an aspect, the detachable light support bar comprises at least one support surface adapted to cooperate with a corresponding surface of the vehicle trailer. The support surface is intended to assist a user during at least removal of the detachable light support bar, and optionally during mounting thereof. The support surface of the detachable light support bar is adapted to permit the detachable light support bar to be positioned in a rest position before being displaced to a locked position or directly, or subsequently, after being unlocked.

According to an aspect, the support surface of the detachable light support bar provides the detachable light support bar with a pivot axis together with the corresponding surface of the vehicle trailer. The support surface of the detachable light support bar is thus configured to provide the detachable light support bar with a pivot axis together with the corresponding surface of the vehicle trailer. This permits the detachable light support bar to be pivoted between the rest position and the locked position about the pivot axis.

The pivot axis can extend substantially parallel with the longitudinal extension of the detachable light support bar when the light support bar is mounted and locked to the vehicle trailer. Optionally, the pivot axis can be substantially vertical with respect to the longitudinal extension of the detachable light support bar when the light support bar is mounted to the vehicle trailer

According to an aspect, the present invention also relates to a vehicle trailer comprising a detachable light support bar as described herein. The present invention relates to a vehicle trailer comprising a detachable light support bar according to any of the appending claims.

According to a second aspect, the present invention relates to a method for removing a detachable light support bar according to any of the preceding claims from a vehicle trailer. The method comprises the steps of;
- activating a release mechanism at an activation point to unlock the detachable light support bar from a connection site of the vehicle trailer using a first grip;
- removing the detachable light support bar using the first grip.

The method permits a user to remove the detachable light support bar in an easy manner. The method can further comprise the step of simultaneously unlocking at least two lock mechanisms upon actuating the release mechanisms.

### BRIEF DESCRIPTION OF THE DRAWINGS

Embodiments of the present invention will be described in greater detail with reference to the accompanying figures in which;
figure 1 shows a vehicle trailer adapted for a boat, or leisure craft having a detachable light support bar according to an embodiment of the present invention;
figure 2 shows the rear of the vehicle trailer form figure 1 in greater detail with a view in perspective;
figure 3 shows the rear of the vehicle trailer of figure 1 in greater detail with a view from above;
figure 4 shows the vehicle trailer of figure 1 after detachment of the detachable light support bar;
figure 5a shows parts of the vehicle trailer and detachable light support bar after detachment from the vehicle trailer with a view from the side;
figure 5b shows parts of the vehicle trailer and the detachable light support bar of figure 5a with a view in perspective;
figures 5c-5d show parts of the lock mechanism in greater detail;
figure 6 shows an embodiment of the detachable light support bar with a view towards the release mechanism and lock mechanism of the detachable light support bar, the lock mechanism being in the locked position;
figure 7 shows the embodiment of the detachable light support bar of figure 6 with a view towards the release mechanism and the lock mechanism of the detachable light support bar, the lock mechanism being in the unlocked position;
figure 8 shows the embodiment of figure 6 of the detachable light support bar with a view from above towards the release mechanism and the lock mechanism of the detachable light support bar, the lock mechanism being in the locked position;
figure 9 shows the embodiment of figure 6 of the detachable light support bar with a view from above towards the release mechanism and the lock mechanism of the detachable light support bar, the lock mechanism being in the unlocked position;
figure 10a shows parts of the vehicle trailer and detachable light support bar just right after detachment from the vehicle trailer with a view from the side;
figure 10b shows parts of the vehicle trailer and the detachable light support bar of figure 10a with a view in perspective;
figure 11a shows parts of the vehicle trailer and detachable light support bar when the detachable light support bar is mounted to the vehicle trailer, with a view from the side; figure 11b shows parts of the vehicle trailer and the detachable light support bar of figure 11a with a view in perspective;
figure 12a shows parts of the vehicle trailer and detachable light support bar when the detachable light support bar is hanging from the vehicle trailer after being released from the vehicle trailer, with a view from the side and;
figure 12b shows parts of the vehicle trailer and the detachable light support bar of figure 12a with a view in perspective.

### DETAILED DESCRIPTION OF PREFERRED EMBODIMENTS

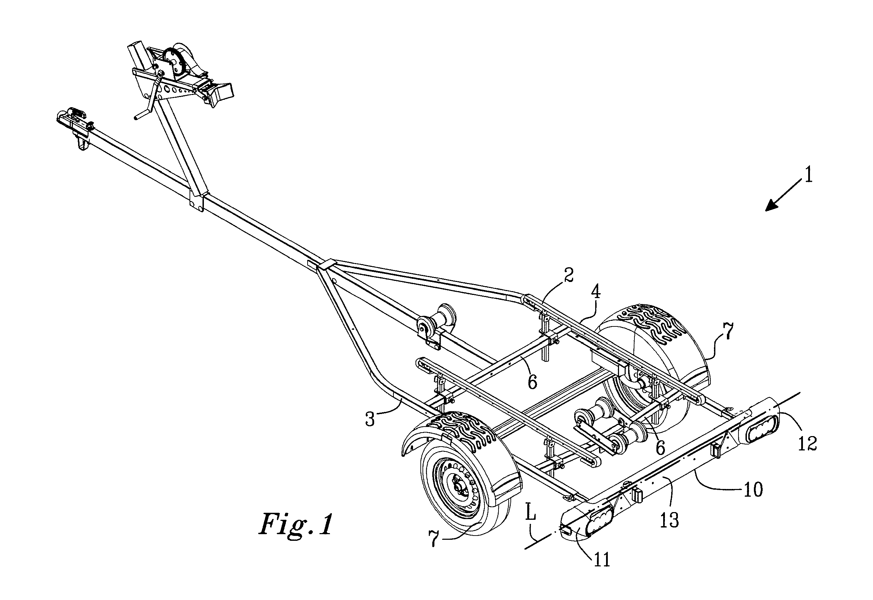

Figure 1 shows a vehicle trailer 1 having a detachable light support bar 10 comprising a first and a second end 11, 12, and which is connected at the rear of the trailer 1. The illustrated vehicle trailer 1 comprises a frame 2 manufactured in a durable material such as plate steel. The frame 2 comprises a first and a second longitudinal bar 3, 4 which extends parallel with at least parts of the length of the vehicle trailer 1. Cross bars 6 provides for rigidity to the frame 2 of the vehicle trailer 1. A pair of wheels 7 enables the vehicle trailer 1 to be towed after a vehicle, such as a car (not shown).

The vehicle trailer 1 is adapted to carry a boat, such as a small leisure craft. or a jet ski, for example. It should be noted that the detachable light support bar 10 can be used with other types of vehicle trailers than those adapted for trailing boats.

For the purpose of orientation herein, the rear of the vehicle trailer 1 is that part of the vehicle trailer intended to face away from the vehicle, and the front of the vehicle trailer is that part adapted to be coupled to the vehicle for the purpose of towing the vehicle trailer.

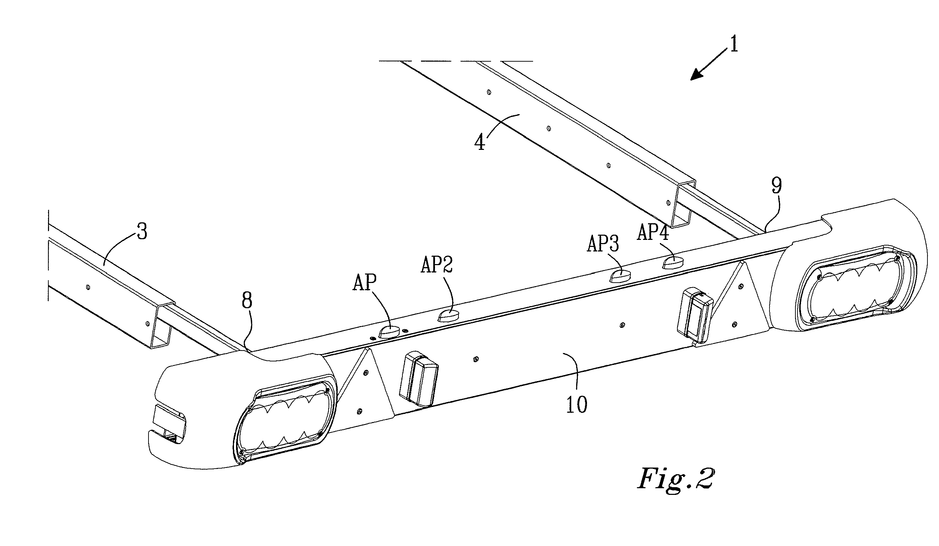

Figure 2-3 show parts of the rear of the vehicle trailer 1 in greater detail. The first and the second longitudinal bar 3, 4 each terminate with a connection site 8, 9 for the detachable light support bar 10. The connection sites 8, 9 will be described in greater detail below. The position of the connection sites 8, 9 are optionally adjustable length wise with respect to the first and the second longitudinal bars 3, 4, enabling the position of the detachable light support bar 10 to be adjusted to accommodate boats of different sizes on the trailer 1.

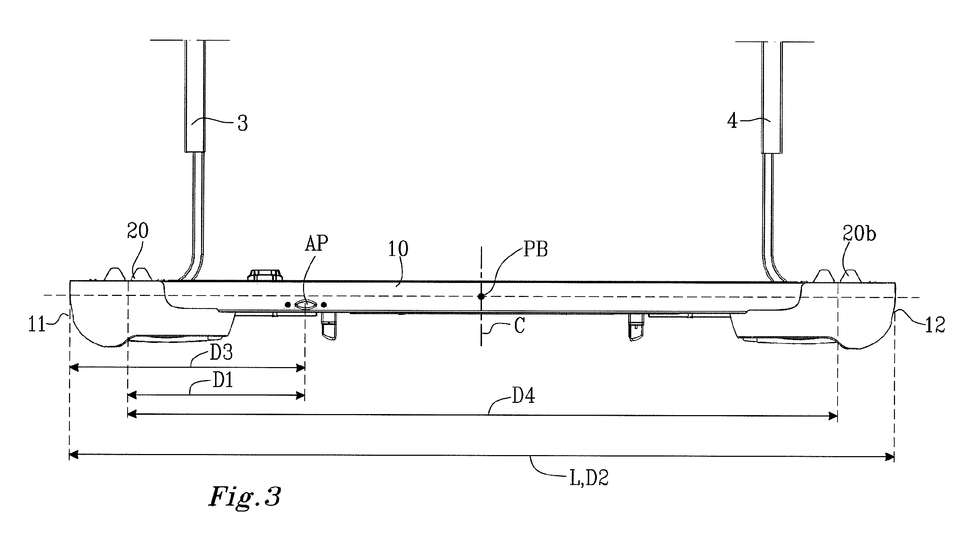

The detachable light support bar 10 has a longitudinal extension L, as indicated in figure 3. It can be formed by a housing or by an open structured material. Extruded aluminum profiles are advantageous and used in the shown embodiment. Other manufacturing materials can be sheet steel, or carbon fiber reinforced polymeric material for example. In cases where a sheet material is used, sensitive parts are preferably covered to prevent dirt and rubble to wear on sensitive parts.

The detachable light support bar 10 is easy handle and can easily be removed from the vehicle trailer 1 by a user. The detachable light support bar 10 has at least one lock mechanism which is arranged in working cooperation with a release mechanism (not shown in figure 3) adapted to unlock the lock mechanism upon activation by a user at an activation point AP. When unlocked, the detachable light support bar 10 can be easily removed from the vehicle trailer 1 as will be described in greater detail herein. Figure 2 also shows alternative activation points AP2-AP4.

The activation point AP is displaced a first distance D1 from the lock mechanism 20. The distance D1 is adapted to enable a user to activate the release mechanism with a first grip, and to remove the detachable light support bar 10 from the vehicle trailer 1 with the same first grip. A point of balance PB is indicated at a centre line C of the detachable light support bar 10, with respect to the longitudinal extension L of the detachable light support bar 10.

Figure 4 shows the detachable light support bar 10 after its being detached from the trailer 1 by a user, leaving the first and the second connection site 8, 9 visible.

The detachable light support bar 10 and its function will be described in greater detail below. For the sake of simplicity, some features have been removed from the figures as compared with figure 1 and 2 for example.

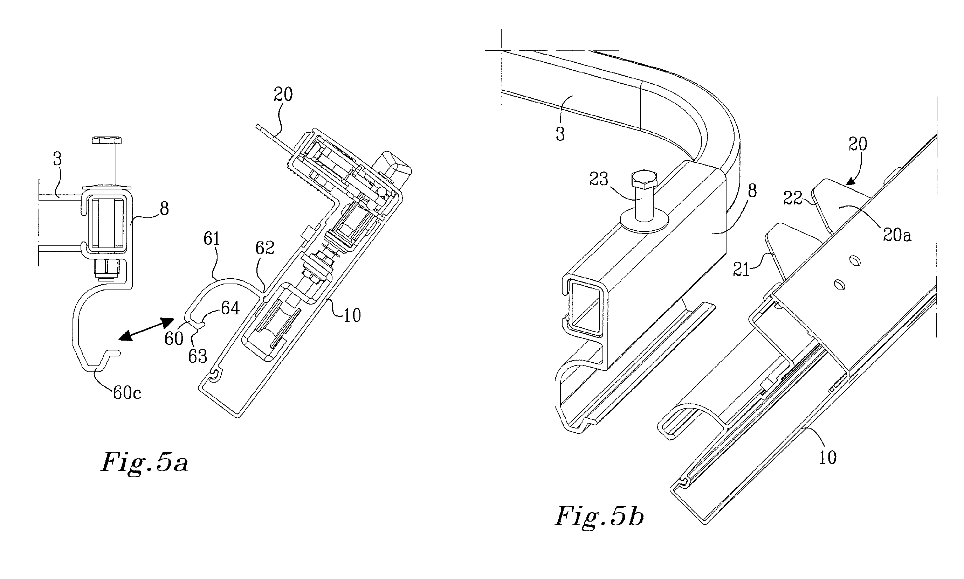

Figure 5a-5b shows a connection site 8 of the vehicle trailer 1 in greater detail. It should be noted that the first and the second connection sites 8, 9 can be of the same type or of different type. To enable the detachable light support bar 10 to be releaseably connected to the vehicle trailer 1, and the connection sites 8, 9 of the detachable light support bar 10, detachable light support bar 10 comprises at least one lock mechanism 20. In this case a first and a second lock mechanism 20, 20b (only one shown in figures 5a-5b). In the shown embodiment, the first and the second lock mechanisms 20, 20b are of the same type.

The lock mechanism 20 cooperates with the connection site 8 to enable the detachable light support bar 10 to be releaseably connected in a secure manner. More specifically, the lock mechanism 20 is of a grip type lock, having a grip arrangement 20a comprising guiding portions 21, 22 adapted guide a lock pin 23 arranged at the connection site 8 into a slot formed between the guiding portions 21, 22, to secure the detachable light support bar 10 to the vehicle trailer 1. The guiding portions 21, 22 form together a substantially V formed, or cone formed opening, which is adapted to guide the lock pin 23 to a position in which it can be restrained, i.e. locked. The guiding portions 21, 22 are integrally formed with respect to each other in this embodiment. Optionally, the lock mechanism can be provided with distinctly separated guiding portions, or guiding means, to guide the pin member 23 to the locked position. If the detachable light support bar 10 is slightly misaligned when being mounted to the vehicle trailer 1, the guiding means, in this case the tilting surfaces of the guiding portions 21, 22, will guide the lock pin 23 of the connection site 8 to a position in which it can be locked. The lock pin 23 of the connection site 8 is formed by a bolt protruding from a surface at the connection site 8.

To keep the detachable light support bar 10 securely fixed to the vehicle trailer 1, the grip arrangement 20a comprises a biasing member, adapted to impart a force component to displace a pivotable lock member PLM, to a position in which the pivotable lock member PLM is locked around the lock pin 23. The biasing member (not shown) can be a spring, an elastic material such a rubber, flexible metal sheet, or any other suitable material adapted to impart a force component to the pivotable lock member PLM. The arrow indicates suitable directions to remove or to mount the detachable light support bar 10 to the vehicle trailer 1 before it reaches the locked position.

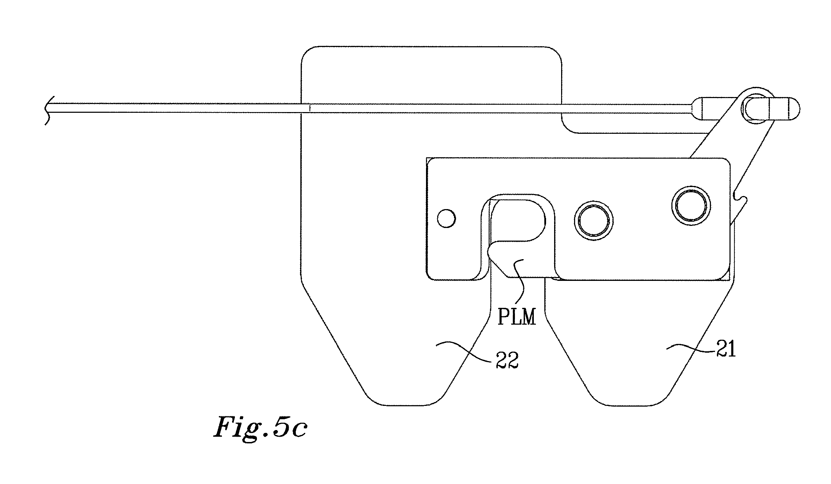

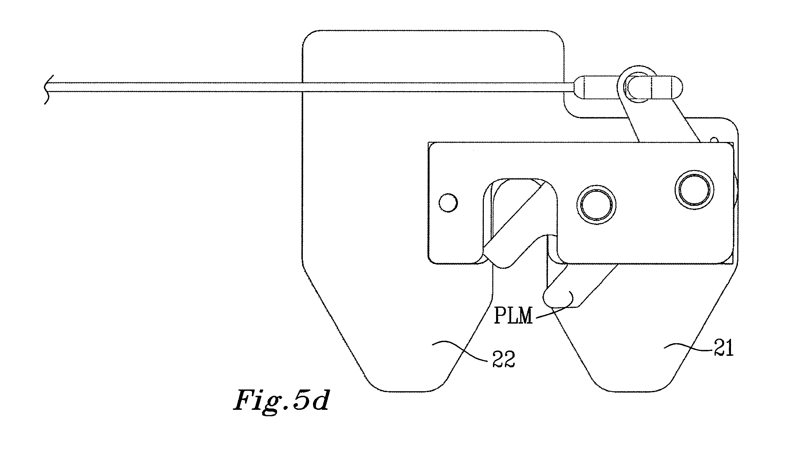

Figures 5c-5d shows the guiding portions 21, 22 in greater detail as well as the pivotable lock member PLM. In which figure 5c shows the lock mechanism in a locked position and figure 5d shows the lock mechanism in a position ready to receive the pin member 23 of the connection site 8 of the vehicle trailer 1.

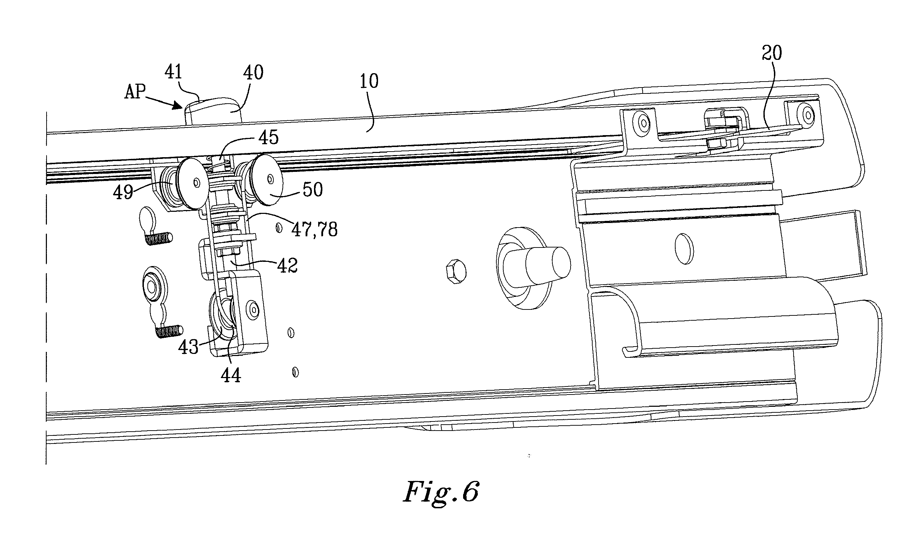

Figure 6 shows the first end 11 of the detachable light support bar 10 with a view towards the vehicle trailer facing side. The lock mechanism 20 is arranged in working cooperation with a release mechanism 40. When the release mechanism is activated, the lock mechanism 20 can be unlocked and the detachable light support bar 10 can be subsequently removed from the vehicle trailer 1. In the shown embodiment, the release mechanism 40 is adapted to operate both the first and the second lock mechanism 20 (of which only the first in shown), it is however possible that the release mechanism is adapted to operate only one lock mechanism.

The release mechanism 40 comprises a trigger button 41, which forms an activation point AP to activate the release mechanism 40. The trigger button could be a handle, a touch sensitive trigger surface or any other means for actuating the release mechanism.

The trigger button 41 operates a displaceable pin member 42 connected to a slip point 43, in the form of a wheel 44. A spring 45 biases the trigger button 41 and the pin member 42 towards a position in which the release mechanism 40 is not operating on the lock mechanism 20 to unlock the lock mechanism 20. The displaceable pin member 42 is in working cooperation with an elongated element 47, in the form of a flexible string 48, such as a wire. The flexible string 48 extends between the each grip arrangement 20a of the first and the second lock mechanisms 20, 20b and is configured to, upon being tensioned, i.e. activated, open the pivotable lock member PLM of the lock mechanism 20, thus enabling the lock mechanism 20 to disengage the pin member 23 of the connection site 8 and the detachable light support bar 10 to be removed.

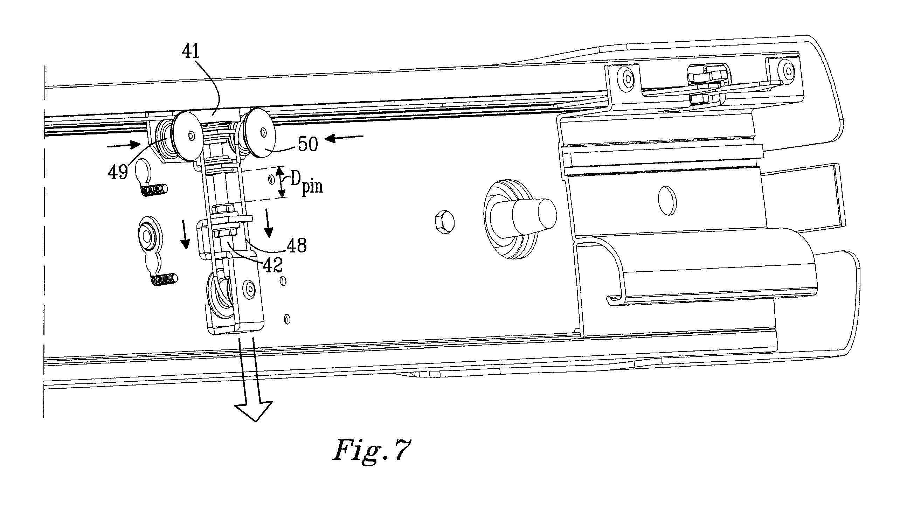

As the trigger button 41 and the pin member 42 is pushed downwards by a user, the slip point 43 is displaced a distance Dpin, as is best illustrated by figure 7. Further in figure 7, arrows can be seen illustrating the direction which the flexible string 48 travels as the pin member 42 is displaced downwards. As can be seen in figure 7, the trigger button 41 has been pushed substantially into the interior of the detachable light support bar 20. During use, the interior can be covered to prevent dirt or other unwanted material to harm the mechanisms.

The flexible string 48 can slip on a first and a second support point 49, 50 to transfer the downwardly motion, i.e. a vertical motion, of the pin member 42 to a horizontal motion of the flexible string 48.

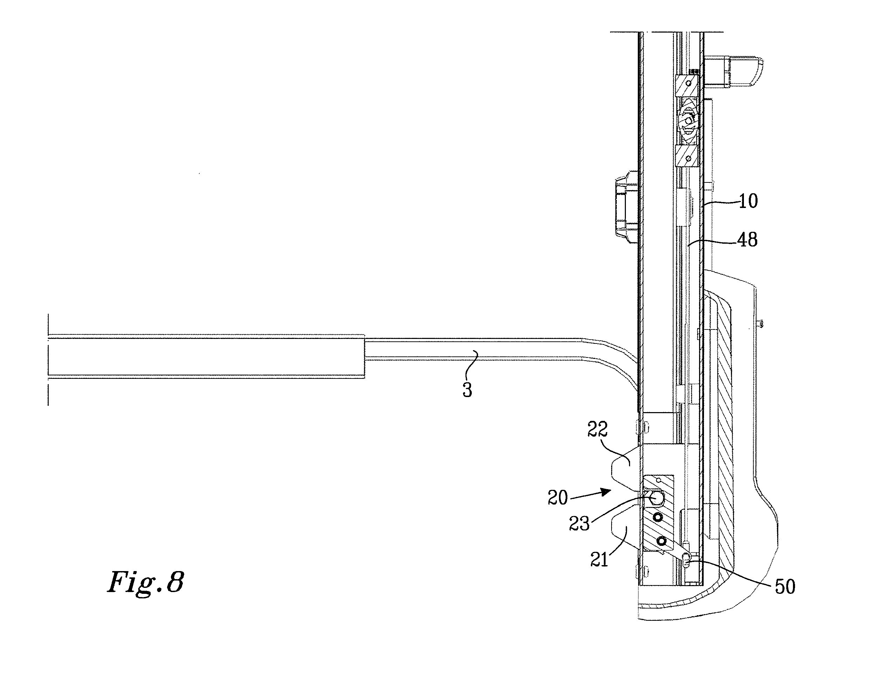

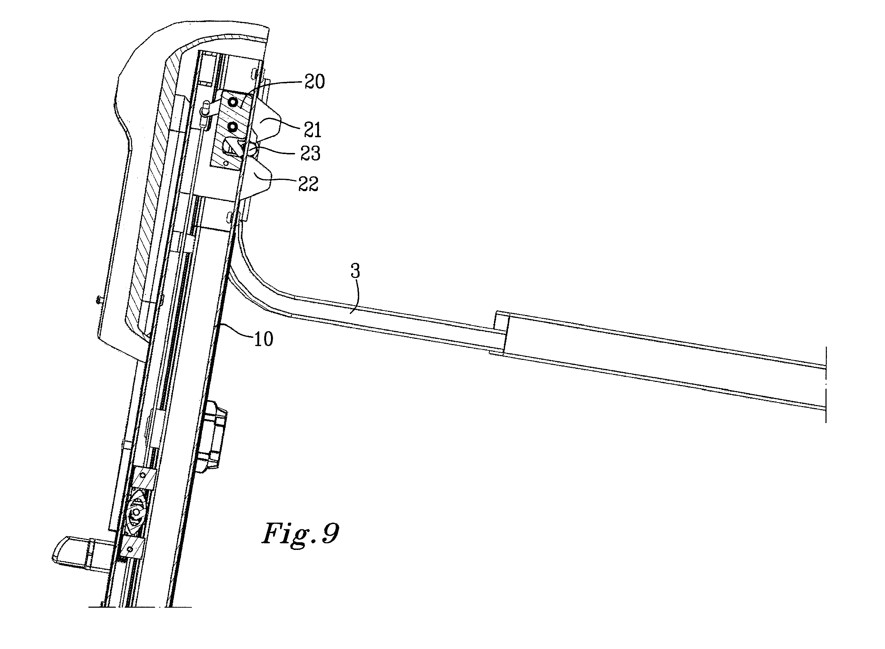

Figure 8 shows the detachable light support bar 20 in the locked position and attached to the vehicle trailer 1 as seen from above. Parts have been removed to expose the lock mechanism 20 and the first and the second guiding portions 21, 22 of the grip arrangement. As can be see, the flexible string 48 is connected to a release peg 50, which when being displaced permits the first and the pivotable lock member PLM to open up and release the pin member 23, as seen in figure 9.

When the release mechanism 40 is relieved from pressure by the users hand, i.e. the hand is removed from the trigger button 41, i.e. the activation point, the pin member 42 is returned to its original position, shown in figure 6 by the force imparted by the spring 45. The grip arrangement 20a of the lock mechanism 20 is now ready to receive the pin member 23 of the connection site 8 again at any appropriate time.

A user can thus simply activate the release mechanism 40 at the activation point AP with a first grip by his first hand, and use his second hand to grasp a second grip on the detachable light support bar 10, to efficiently remove the detachable light support bar 10 in an easy manner.

An electrical release mechanism is an option. Such release mechanism could operate so that after activation at the activation point AP, a signal is sent to an electrical motor in the lock mechanism so that the lock mechanism is unlocked.

To simplify the removal and the mounting of the detachable light support bar 10, the detachable light support bar 10 comprises at least one support surface 60. In this case, the detachable light support bar 10 comprises a first and a second support surface (only one shown) arranged in the near proximity of the first and the second lock mechanisms 20. A corresponding surface 60c is arranged on the connection site 8, 9. In the shown embodiment, the support surface 60 of the detachable light support bar 10 is formed by a support member 61 having a cross section which transcends through an arc shaped form from a first direction to a second direction substantially perpendicular to the first direction, as can be seen in figure 5a. The support member 61 has a proximal end 62 attached to the detachable light support bar 10 and a distal end distanced from the detachable light support bar 10. The distal end 63 of the support member 60 comprises a hook flange 64 adapted to cooperate with a similar flange on the connection site 8.

The corresponding support surface 60c of the connection site 8 of the vehicle trailer 1 is formed by a support member 61c having a substantially similar form as the support member 60 of the detachable light support bar 10.

In the shown embodiment, the support member 60 of the detachable light support bar 10 is integrally formed parts of the detachable light support bar 10, but can of course be formed by a distinct component and attached to the detachable light support bar 10.

The method for mounting/removing, or dismounting, the detachable light support bar 10 will be described in greater detail hereafter. Figure 5a-5b shows the detachable light support bar 10 and the connection site 8 after the detachable light support bar 10 has been detached therefrom.

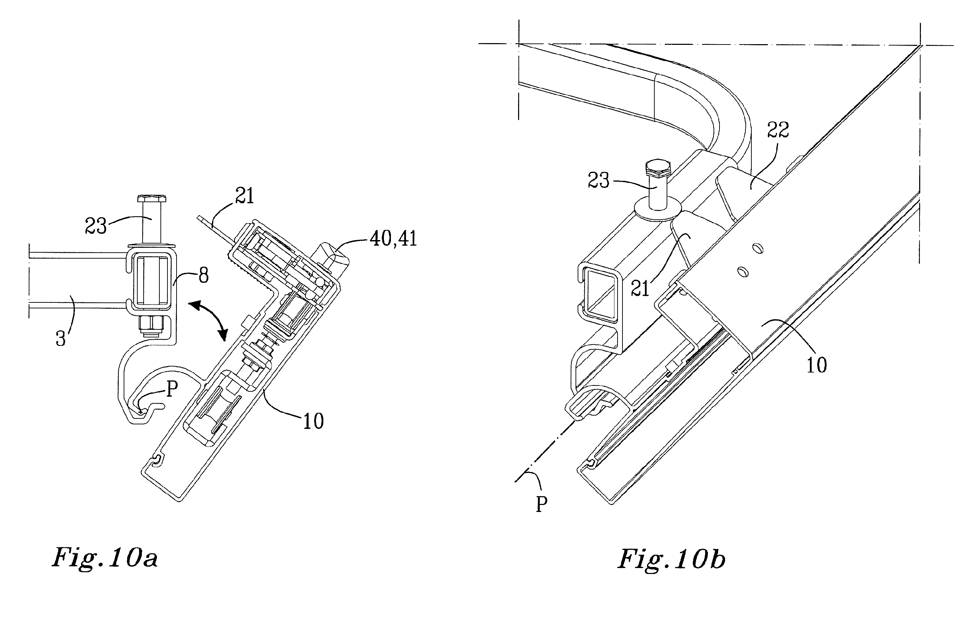

When mounting the detachable light support bar 10 to the vehicle trailer 1 and the connection site 8, the support surface 60 of the detachable light support bar 10 is put to rest on the corresponding support surface 60c of the connection site 8 with a motion as indicated by the arrow in figure 5a. Likewise, when removing it from the rest position, the motion is reversed. The rest position is shown in figures 10a-10b. A pivot axis P is formed about which the detachable light support bar 10 can pivot into the locked position at which the first and the second guiding potions 21, 22 guides the pin member 23 of the connection site 8 of the vehicle trailer 1, into a locked position.

By using such a pivot motion to put the detachable light support bar 10 to the locked position, a user uses the leverage provided by the support surfaces 60, 60c to impart the necessary force to press the pin member 23 of the connection site 8 into the locked position between the first and the second guiding portions 21, 22 of the lock mechanism 20. Further, when removing the detachable light support bar 10, the detachable light support bar 10 can rest for a moment on the support surface helping the user to get a firm grip about the detachable light support bar 10 with one or two hands.

The support surface 60 of the detachable light support bar 10 is thus advantageously separated a distance from the grip arrangement 20a of the lock mechanism 20 to enable leverage when displacing the detachable light support bar 10 from a rest position to a locked position.

The detachable light support bar 10, in the embodiment shown in figures 10a-10b, pivots about a pivot axis P. The pivot axis P is substantially parallel with the longitudinal extension of the detachable light support bar 10, when the detachable light support bar 10 is mounted to the vehicle trailer 1. It is however plausible that the detachable light support bar 10 is configured to pivot about a pivot axis which is substantially perpendicular to the detachable light support bar 10, when the detachable light support bar 10 is mounted to the vehicle trailer 1. Such pivot axis is also referred to as a vertical axis herein.

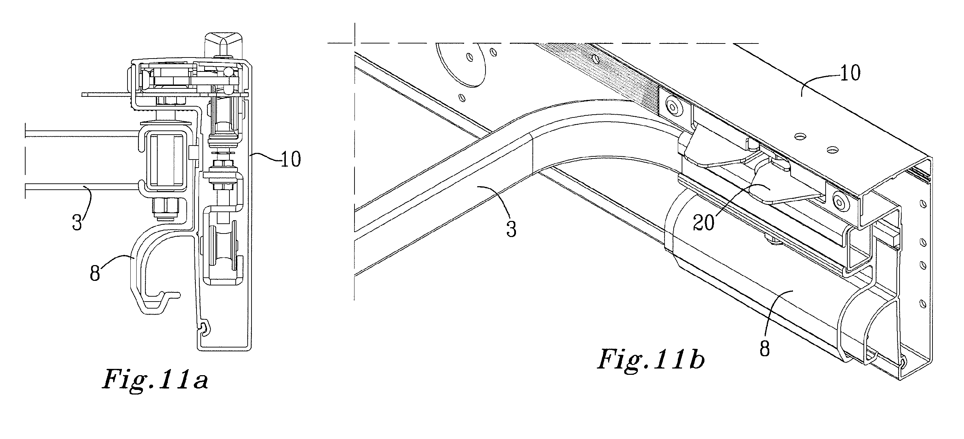

Figures 11a-11b shows how the detachable light support bar 10 has been pivoted into position with the connection site 8.

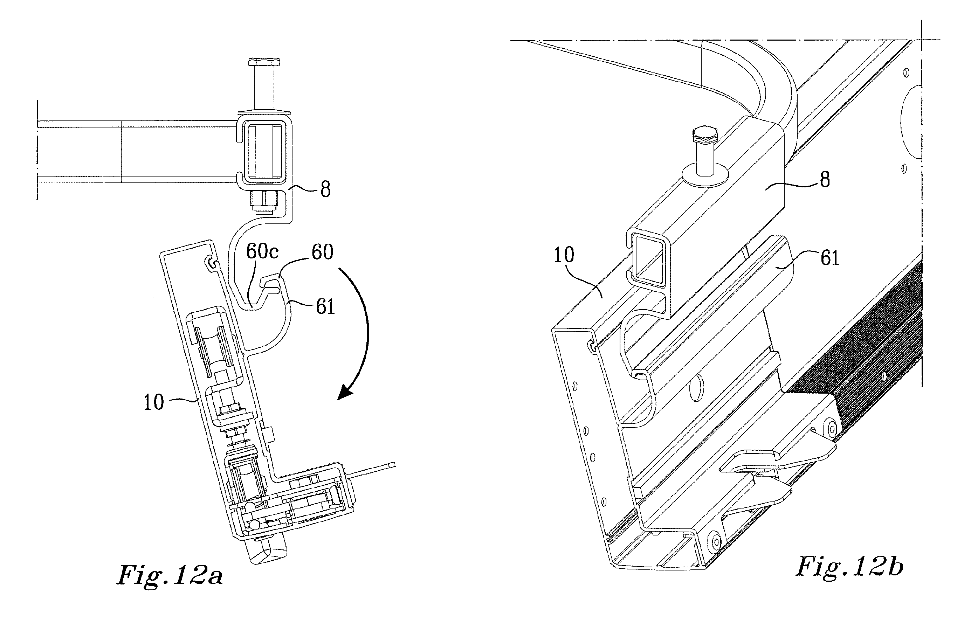

The support member 61 is advantageously formed to cooperate with the connection site 8 in a manner so that the detachable light support bar 10 cannot accidentally disconnect from the vehicle trailer 1. If the release mechanism 20 is activated by mistake, the detachable light support bar 10 will not be fully released and dropped to the ground. The detachable light support bar 10 will simply pivot about the pivot axis P, as indicated by the arc formed arrow in figure 12a, and hang from the connection site 8 by means of the hook flange 64 at the distal end 63 of the support member 60.

## Claims

1. A detachable light support bar (10) for a vehicle trailer (1), said detachable light support bar (10) having a first and a second end (11, 12) and a longitudinal extension (L) there between, said detachable light support bar (10) comprising at least one lock mechanism (20, 20b) to releaseably lock said detachable light support bar (10) to said vehicle trailer (1),
said lock mechanism (20, 20b) being arranged in working cooperation with at least one release mechanism (40), said at least one release mechanism (40) being adapted to unlock said at least one lock mechanism (20, 20b) upon activation at an activation point (AP) by a user, thus permitting said detachable light support bar (10) to be removed from said vehicle trailer (1),
**characterized in that**
said activation point (AP) is positioned on said detachable light support bar (10) and is displaced at a distance (D1) from said at least one lock mechanism (20, 20b) measured along said longitudinal extension (L) of said detachable light support bar (10), enabling a user to actuate said release mechanism (40) with a first grip, and to remove said detachable light support bar (10) from said vehicle trailer (1) with said first grip.

2. The detachable light support bar (10) according to claim 1, wherein said first and said second ends (11, 12) of said detachable light support bar (10) are separated by a first distance (D2), and in that said activation point (AP) is arranged at a second distance (D3) from said first end (11) of said detachable light support bar (10), said second distance (D3) being about 10-50 % of said first distance (D2).

3. The detachable light support bar (10) according to any of the preceding claims, wherein said detachable light support bar (10) comprises a point of balance (PB) arranged between said first and said second ends (11, 12) of said detachable light support bar (10), and wherein said activation point (AP) is arranged between said point of balance (PB) and said at least one lock mechanism (20).

4. The detachable light support bar (10) according to any of the preceding claims, wherein said detachable light support bar (10) comprises a first and a second lock mechanism (20, 20b) adapted to cooperate with a first and a second connection site (8, 9) on said vehicle trailer (1), and in that said release mechanism (40) is arranged in working cooperation with said first and said second lock mechanisms (20, 20b), so that upon activation of said release mechanism (40), said first and said second lock mechanisms (20, 20b) are unlocked.

5. The detachable light support bar (10) according to claim 4, wherein said first and said second lock mechanisms (20, 20b) are unlocked simultaneously upon activation of said release mechanism (40).

6. The detachable light support bar (10) according to claim 4 or 5, wherein said activation point (AP) is arranged between said first and said second lock mechanisms (20, 20b), with respect to said longitudinal extension (L) of said detachable light support bar (10).

7. The detachable light support bar (10) according to claim 6, wherein said first and second lock mechanisms (20, 20b) are separated by a third distance (D4) measured along said longitudinal extension (L) of said detachable light support bar (10), and in that said activation point (AP) is arranged such that the distance (D1) from said first lock mechanism (20) measured along said longitudinal extension (L) of said detachable light support bar (10) is about 10-50 % of said third distance (D4).

8. The detachable light support bar (10) according to any of the preceding claims, wherein said detachable light support bar (10) comprises at least one support surface (60) adapted to cooperate with a corresponding surface (60c) of said vehicle trailer (1), wherein said support surface (60) of said detachable light support bar (10) is adapted to permit said detachable light support bar (10) to be positioned in a rest position before being displaced to a locked position or directly, or subsequently, after being unlocked.

9. The detachable light support bar (10) according to claim 8, wherein said support surface (60) of said detachable light support bar (10) provides said detachable light support bar (10) with a pivot axis (P) together with said corresponding surface (60c) of said vehicle trailer (1), permitting said detachable light support bar (10) to be pivoted between said rest position and said locked position about said pivot axis (P).

10. The detachable light support bar (10) according to claims 9, wherein said pivot axis (P) extends substantially parallel with said longitudinal extension (L) of said detachable light support bar (10) when said detachable light support bar (10) is mounted and locked to said vehicle trailer (1).

11. A vehicle trailer (1) comprising a detachable light support bar (10) according to any of the preceding claims.

12. A method for removing a detachable light support bar (10) according to any of the claims 1 to 10 from a vehicle trailer (1),
**characterized in that**
said method comprises the steps of;
- activating a release mechanism (40) at an activation point (AP) to unlock said detachable light support bar (10) from a connection site (8,9) of said vehicle trailer (1) using a first grip;
- removing said detachable light support bar (1) using said first grip.

13. The method according to claim 12, wherein said method further comprises the step of;
- simultaneously unlocking at least two lock mechanisms (20, 20b) upon actuating said release mechanism (40).

## Patentansprüche

1. Eine abnehmbare Lichtträgerstange (10) für einen Fahrzeuganhänger (1), wobei die abnehmbare Lichtträgerstange (10) ein erstes und ein zweites Ende (11, 12) aufweist sowie eine längs gerichtete Erstreckung (L) zwischen diesen beiden, wobei die abnehmbare Lichtträgerstange (10) mindestens einen Verriegelungsmechanismus (20, 20b) umfasst, um die abnehmbare Lichtträgerstange (10) entriegelbar an dem Fahrzeuganhänger (1) zu verriegeln,
wobei der Verriegelungsmechanismus (20, 20b) so angelegt ist, dass er mit mindestens einem Entriegelungsmechanismus (40) zusammenwirkt, wobei der mindestens eine Entriegelungsmechanismus (40) dafür ausgelegt ist, den mindestens einen Verriegelungsmechanismus (20, 20b) auf das Betätigen eines Aktivierungspunktes (AP) durch einen Nutzer hin zu entriegeln, wodurch das Entfernen der abnehmbaren Lichtträgerstange (10) von dem Fahrzeuganhänger (1) zugelassen wird,
**dadurch gekennzeichnet, dass**
der Aktivierungspunkt (AP) an der abnehmbaren Lichtträgerstange (10) angeordnet ist und um einen entlang der längs gerichteten Erstreckung (L) der abnehmbaren Lichtträgerstange (10) gemessenen Abstand (D1) von dem mindestens einen Verriegelungsmechanismus (20, 20b) versetzt ist, wodurch der Nutzer in die Lage versetzt wird, den Entriegelungsmechanismus (40) mit einem ersten Griff zu betätigen und die abnehmbare Lichtträgerstange (10) mittels dieses ersten Griffs von dem Fahrzeuganhänger (1) zu entfernen.

2. Die abnehmbare Lichtträgerstange (10) nach Anspruch 1, worin das erste und das zweite Ende (11, 12) der abnehmbaren Lichtträgerstange (10) durch einen ersten Abstand (D2) getrennt sind, und worin der Aktivierungspunkt (AP) in einem zweiten Abstand (D3) von dem ersten Ende (11) der abnehmbaren Lichtträgerstange (10) angeordnet ist, wobei der zweite Abstand (D3) ca. 10 bis 50 % des ersten Abstands (D2) beträgt.

3. Die abnehmbare Lichtträgerstange (10) nach einem der vorangehenden Ansprüche, worin die abnehmbare Lichtträgerstange (10) einen Balance-Punkt (PB) umfasst, der zwischen dem ersten und dem zweiten Ende (11, 12) der abnehmbaren Lichtträgerstange (10) angeordnet ist, und worin der Aktivierungspunkt (AP) zwischen dem Balance-Punkt (PB) und dem mindestens einen Verriegelungsmechanismus (20) angeordnet ist.

4. Die abnehmbare Lichtträgerstange (10) nach einem der vorangehenden Ansprüche, worin die abnehmbare Lichtträgerstange (10) einen ersten und einen zweiten Verriegelungsmechanismus (20, 20b) umfasst, die so angelegt sind, dass sie mit einer ersten und einer zweiten Verbindungsstelle (8, 9) an dem Fahrzeuganhänger (1) zusammenwirken, und worin der Entriegelungsmechanismus (40) so angelegt ist, dass er mit dem ersten und dem zweiten Verriegelungsmechanismus (20, 20b) zusammenwirkt, so dass auf die Betätigung des Entriegelungsmechanismus (40) hin der erste und der zweite Verriegelungsmechanismus (20, 20b) entriegelt werden.

5. Die abnehmbare Lichtträgerstange (10) nach Anspruch 4, worin der erste und der zweite Verriegelungsmechanismus (20, 20b) gleichzeitig auf die Betätigung des Entriegelungsmechanismus (40) hin entriegelt werden.

6. Die abnehmbare Lichtträgerstange (10) nach Anspruch 4 oder 5, worin der Aktivierungspunkt (AP) zwischen dem ersten und dem zweiten Verriegelungsmechanismus (20, 20b), bezogen auf die längs gerichtete Erstreckung (L) der abnehmbaren Lichtträgerstange (10), angeordnet ist.

7. Die abnehmbare Lichtträgerstange (10) nach Anspruch 6, worin der erste und der zweite Verriegelungsmechanismus (20, 20b) durch einen dritten Abstand (D4) getrennt sind, gemessen entlang der längs gerichteten Erstreckung (L) der abnehmbaren Lichtträgerstange (10), und worin der Aktivierungspunkt (AP) so angeordnet ist, dass der Abstand (D1) von dem ersten Verriegelungsmechanismus (20), gemessen entlang der längs gerichteten Erstreckung (L) der abnehmbaren Lichtträgerstange (10), etwa 10 bis 50 % des dritten Abstands (D4) beträgt.

8. Die abnehmbare Lichtträgerstange (10) nach einem der vorangehenden Ansprüche, worin die abnehmbare Lichtträgerstange (10) mindestens eine Lagerfläche (60) umfasst, welche dafür ausgelegt ist, mit einer entsprechenden Fläche (60c) des Fahrzeuganhängers (1) zusammen zu wirken, wobei die Lagerfläche (60) der abnehmbaren Lichtträgerstange (10) dafür ausgelegt ist, das Positionieren der abnehmbaren Lichtträgerstange (10) in einer Ruheposition zu ermöglichen, bevor diese in eine verriegelte Position gebracht wird, oder direkt, oder nachfolgend, nachdem sie entriegelt worden ist.

9. Die abnehmbare Lichtträgerstange (10) nach Anspruch 8, worin die Lagerfläche (60) der abnehmbaren Lichtträgerstange (10) die abnehmbare Lichtträgerstange (10) gemeinsam mit der entsprechenden Fläche (60c) des Fahrzeuganhängers (1) mit einer Schwenkachse (P) versieht, wodurch es der abnehmbaren Lichtträgerstange (10) ermöglicht wird, zwischen der Ruheposition und der verriegelten Position um die Schwenkachse (P) herum geschwenkt zu werden.

10. Die abnehmbare Lichtträgerstange (10) nach Anspruch 9, worin sich die Schwenkachse (P) im Wesentlichen parallel zu der längsgerichteten Erstreckung (L) der abnehmbaren Lichtträgerstange (10) erstreckt, wenn die abnehmbare Lichtträgerstange (10) montiert und an dem Fahrzeuganhänger (1) verriegelt ist.

11. Ein Fahrzeuganhänger (1), umfassend eine abnehmbare Lichtträgerstange (10) nach einem der vorangehenden Ansprüche.

12. Ein Verfahren zum Entfernen einer abnehmbaren Lichtträgerstange (10) nach einem der Ansprüche 1 bis 10 von einem Fahrzeuganhänger (1)
**dadurch gekennzeichnet, dass**
das Verfahren folgende Schritte umfasst:
- Betätigen eines Entriegelungsmechanismus' (40) an einem Aktivierungspunkt (AP), um die abnehmbare Lichtträgerstange (10) von einer Verbindungsstelle (8, 9) des Fahrzeuganhängers (1) mit einem ersten Griff zu entriegeln,
- Entfernen der abnehmbaren Lichtträgerstange (10), indem dieser erste Griff benutzt wird.

13. Das Verfahren nach Anspruch 12, worin das Verfahren des Weiteren folgenden Schritt umfasst:
- gleichzeitiges Entriegeln von mindestens zwei Schließmechanismen (20, 20b) auf das Betätigen des Entriegelungsmechanismus' (40) hin.

## Revendications

1. Barre de support de feu amovible (10) pour une remorque de véhicule (1), ladite barre de support de feu amovible (10) ayant une première et une deuxième extrémité (11, 12) et une extension longitudinale (L) entre celles-ci, ladite barre de support de feu amovible (10) comprenant au moins un mécanisme de verrouillage (20, 20b) pour verrouiller de manière libérable ladite barre de support de feu amovible (10) sur ladite remorque de véhicule (1),
ledit mécanisme de verrouillage (20, 20b) étant agencé en coopération fonctionnelle avec au moins un mécanisme de libération (40), ledit au moins un mécanisme de libération (40) étant adapté pour déverrouiller ledit au moins un mécanisme de verrouillage (20, 20b) lors de l'activation en un point d'activation (AP) par un utilisateur, en permettant ainsi à ladite barre de support de feu amovible (10) d'être retirée de ladite remorque de véhicule (1),
**caractérisée en ce que**
ledit point d'activation (AP) est positionné sur ladite barre de support de feu amovible (10) et est déplacé d'une distance (D1) par rapport audit au moins un mécanisme de verrouillage (20, 20b) mesurée le long de ladite extension longitudinale (L) de ladite barre de support de feu amovible (10), en permettant à un utilisateur d'actionner ledit mécanisme de libération (40) avec une première poignée et de retirer ladite barre de support de feu amovible (10) de ladite remorque de véhicule (1) avec ladite première poignée.

2. Barre de support de feu amovible (10) selon la revendication 1, dans laquelle ladite première et ladite deuxième extrémité (11, 12) de ladite barre de support de feu amovible (10) sont séparées d'une première distance (D2), et en ce que ledit point d'activation (AP) est agencé à une deuxième distance (D3) de ladite première extrémité (11) de ladite barre de support de feu amovible (10), ladite deuxième distance (D3) étant d'environ 10 à 50 % de ladite première distance (D2).

3. Barre de support de feu amovible (10) selon l'une quelconque des revendications précédentes, dans laquelle ladite barre de support de feu amovible (10) comprend un point d'équilibre (PB) agencé entre ladite première et ladite deuxième extrémité (11, 12) de ladite barre de support de feu amovible (10) et dans laquelle ledit point d'activation (AP) est agencé entre ledit point d'équilibre (PB) et ledit au moins un mécanisme de verrouillage (20).

4. Barre de support de feu amovible (10) selon l'une quelconque des revendications précédentes, dans laquelle ladite barre de support de feu amovible (10) comprend un premier et un deuxième mécanisme de verrouillage (20, 20b) adaptés pour coopérer avec un premier et un deuxième site de connexion (8, 9) sur ladite remorque de véhicule (1), et en ce que ledit mécanisme de libération (40) est agencé en coopération fonctionnelle avec ledit premier et ledit deuxième mécanisme de verrouillage (20, 20b), de manière que, lors de l'activation dudit mécanisme de libération (40), ledit premier et ledit deuxième mécanisme de verrouillage (20, 20b) soient déverrouillés.

5. Barre de support de feu amovible (10) selon la revendication 4, dans laquelle ledit premier et ledit deuxième mécanisme de verrouillage (20, 20b) sont déverrouillés simultanément lors de l'activation dudit mécanisme de libération (40).

6. Barre de support de feu amovible (10) selon la revendication 4 ou 5, dans laquelle ledit point d'activation (AP) est agencé entre ledit premier et ledit deuxième mécanisme de verrouillage (20, 20b), par rapport à ladite extension longitudinale (L) de ladite barre de support de feu amovible (10).

7. Barre de support de feu amovible (10) selon la revendication 6, dans laquelle ledit premier et ledit deuxième mécanisme de verrouillage (20, 20b) sont séparés d'une troisième distance (D4) mesurée le long de ladite extension longitudinale (L) de ladite barre de support de feu amovible (10), et en ce que ledit point d'activation (AP) est agencé de manière que la distance (D1) par rapport audit premier mécanisme de verrouillage (20) mesurée le long de ladite extension longitudinale (L) de ladite barre de support de feu amovible (10) soit d'environ 10 à 50 % de ladite troisième distance (D4).

8. Barre de support de feu amovible (10) selon l'une quelconque des revendications précédentes, dans laquelle ladite barre de support de feu amovible (10) comprend au moins une surface de support (60) adaptée pour coopérer avec une surface correspondante (60c) de ladite remorque de véhicule (1), dans laquelle ladite surface de support (60) de ladite barre de support de feu amovible (10) est adaptée pour permettre à ladite barre de support de feu amovible (10) d'être positionnée dans une position de repos avant d'être déplacée jusqu'à une position verrouillée ou directement, ou ultérieurement, après avoir été déverrouillée.

9. Barre de support de feu amovible (10) selon la revendication 8, dans laquelle ladite surface de support (60) de ladite barre de support de feu amovible (10) fournit à ladite barre de support de feu amovible (10) un axe de pivotement (P) conjointement à ladite surface correspondante (60c) de ladite remorque de véhicule (1), permettant à ladite barre de support de feu amovible (10) d'être pivotée entre ladite position de repos et ladite position verrouillée autour dudit axe de pivotement (P).

10. Barre de support de feu amovible (10) selon la revendication 9, dans laquelle ledit axe de pivotement (P) s'étend sensiblement parallèle à ladite extension longitudinale (L) de ladite barre de support de feu amovible (10) quand ladite barre de support de feu amovible (10) est montée et verrouillée sur ladite remorque de véhicule (1).

11. Remorque de véhicule (1) comprenant une barre de support de feu amovible (10) selon l'une quelconque des revendications précédentes.

12. Procédé pour démonter une barre de support de feu amovible (10) selon l'une quelconque des revendications 1 à 10 d'une remorque de véhicule (1), **caractérisé en ce que** ledit procédé comprend les étapes suivantes :
- activer un mécanisme de libération (40) en un point d'activation (AP) pour déverrouiller ladite barre de support de feu amovible (10) d'un site de connexion (8, 9) de ladite remorque de véhicule (1) en utilisant une première poignée ;
- retirer ladite barre de support de feu amovible (1) en utilisant ladite première poignée.

13. Procédé selon la revendication 12, dans lequel ledit procédé comprend en outre l'étape suivante :
- déverrouiller simultanément au moins deux mécanismes de verrouillage (20, 20b) lors de l'actionnement dudit mécanisme de libération (40).
